# EUROPÄISCHE PATENTSCHRIFT

(11) **EP 2 209 032 B1**
(45) Veröffentlichungstag und Bekanntmachung des Hinweises auf die Patenterteilung: **27.11.2013**
(21) Anmeldenummer: 10000061.1
(22) Anmeldetag: 07.01.2010
(51) Int. Cl.: G02B 6/44

(54) **Lichtwellenleiterverteilereinrichtung**
Optical fibre distributor
Dispositif de distribution de fibres optiques

(30) Priorität: 15.01.2009 DE 202009000621 U
(43) Veröffentlichungstag der Anmeldung: 21.07.2010
(73) Patentinhaber: CCS Technology Inc., Wilmington, DE 19803 (US)
(72) Erfinder: Fabrykowski, Grzegorz, 95-010 Strykow (PL); Matthies, Jürgen, 58300 Wetter (DE); Syplacz, Roman Arnold Theodor, 58099 Hagen (DE)
(74) Vertreter: Sturm, Christoph

(56) Entgegenhaltungen:
- EP-A1- 0 557 188
- WO-A1-00/11505
- WO-A2-2007/095037
- DE-U1- 29 920 298
- DE-U1-202005 011 515
- GB-A- 2 256 286
- US-A- 5 142 606
- US-A- 5 511 144
- US-B1- 6 243 526
- US-B1- 6 396 989
- US-B1- 6 612 515

## Beschreibung

Die Erfindung betrifft eine Lichtwellenleiterverteilereinrichtung.

Beim Aufbau von Datenübertragungsnetzen aus Lichtwellenleitern ist es erforderlich, Lichtwellenleiter miteinander zu verbinden. Derartige Verbindungsstellen müssen sowohl außerhalb von Gebäuden sowie innerhalb von Gebäuden gehandhabt werden. Außerhalb von Gebäuden finden Verbindungsstellen zwischen Lichtwellenleitern in sogenannten Kabelmuffen oder Straßenverteilern Aufnahme. Innerhalb von Gebäuden werden Verbindungsstellen zwischen Lichtwellenleitern in sogenannten Verteilerschränken gehandhabt.

Dann, wenn Lichtwellenleiterverbindungen innerhalb kleinerer Gebäude, wie zum Beispiel innerhalb von Einfamilienhäusern, gehandhabt werden müssen, sind Lichfinrellenleiterverteilerschränke ungeeignet, da nur eine relativ kleine Anzahl von Lichtwellenleiterverbindungen gehandhabt werden muss. Es besteht daher Bedarf an einer Lichtwellenleiterverteilereinrichtung, die der Handhabung von Lichtwellenleiterverbindungen innerhalb kleinerer Gebäude, insbesondere innerhalb von Einfamilienhäusern, dient. Eine solche Lichtwellenleiterverteilereinrichtung muss eine schonende Handhabung der Lichtwellenleiter gewährleisten. Ferner muss eine solche Lichtwellenleiterverteilereinrichtung flexibel einsetzbar sein, d.h. es sollten sowohl Lichtwellenleiterspleißverbindungen als auch Lichtwellenleitersteckverbindungen zwischen Lichtwellenleitern auf kleinem Bauraum gehandhabt werden können.

Eine Lichtwellenleiterverteilereinrichtung gemäß dem Oberbegriff des Anspruchs 1 ist aus der US 5,142,606 A bekannt.

Hiervon ausgehend liegt der vorliegenden Erfindung das Problem zu Grunde, eine neuartige Lichtwellenleiterverteilereinrichtung zu schaffen.

Dieses Problem wird nach einem ersten Aspekt der Erfindung durch eine Lichtwellenleiterverteilereinrichtung gemäß Anspruch 1 gelöst.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1:: eine perspektivische Ansicht einer erfindungsgemäßen Lichtwellenleiterverteilereinrichtung in montiertem Zustand;
- Fig. 2:: die Lichtwellenleiterverteilereinrichtung der Fig. 1 bei demontiertem Gehäuseoberteil;
- Fig. 3:: die Lichtwellenleiterverteilereinrichtung der Fig. 1 bei demontiertem Gehäuseoberteil zusammen mit Spleißverbindungen zwischen Lichtwellenleitern;
- Fig. 4:: die Lichtwellenleiterverteilereinrichtung der Fig. 1 bei demontiertem Gehäuseoberteil und einem demontierten, trommelartigen Lichtwellenleiterführungselement;
- Fig. 5:: die Lichtwellenleiterverteilereinrichtung der Fig. 1 bei demontiertem Gehäuseoberteil und einem demontierten, trommelartigen Lichtwellenleiterführungselement zusammen mit Steckverbindungen zwischen Lichtwellenleitern;
- Fig. 6:: eine perspektivische Ansicht einer weiteren erfindungsgemäßen Lichtwellenleiterverteilereinrichtung in montiertem Zustand bei demontiertem Gehäuseoberteil;
- Fig. 7:: eine perspektivische Ansicht einer weiteren erfindungsgemäßen Lichtwellenleiterverteilereinrichtung in montiertem Zustand bei demontiertem Gehäuseoberteil;
- Fig. 8:: eine perspektivische Ansicht einer weiteren erfindungsgemäßen Lichtwellenleiterverteilereinrichtung in montiertem Zustand bei demontiertem Gehäuseoberteil; und
- Fig. 9:: ein demontiertes, trommelartiges Lichtwellenleiterführungselement der Lichtwellenleiterverteilereinrichtung der Fig. 8.

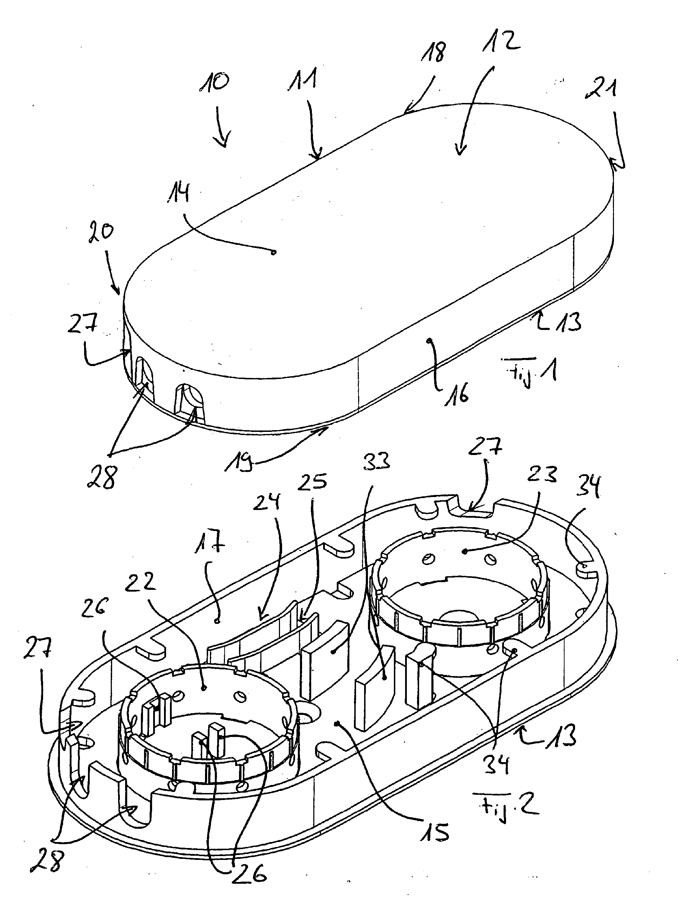

Fig. 1 bis 5 zeigen unterschiedliche Ansichten eines Ausführungsbeispiels einer Lichtwellenleiterverteilereinrichtung 10 der hier vorliegenden Erfindung.

Die Lichtwellenleiterverteilereinrichtung 10 der Fig. 1 bis 5 umfasst ein Gehäuse 11 aus einem Gehäuseoberteil 12 und einem Gehäuseunterteil 13.

Das Gehäuseoberteil 12 und das Gehäuseunterteil 13 umfassen jeweils eine Bodenwand 14 bzw. 15 und eine Seitenwand 16 bzw. 17, wobei in montiertem Zustand (siehe Fig. 1) der Lichtwellenleiterverteilereinrichtung 10 und damit des Gehäuses 11 das Gehäuseunterteil 13 und das Gehäuseoberteil 12 derart zusammensteckbar sind, dass sich unter Ausbildung eines Gehäuseinnenraums die Bodenwände 14 und 15 gegenüberliegen und sich die Seitenwände 16, 17 zumindest abschnittsweise überlappen.

Das Gehäuse 11 der Lichtwellenleiterverteilereinrichtung 10 verfügt über eine längliche Kontur mit zwei relativ langen Seiten 18, 19 und zwei relativ kurzen Seiten 21, 21, wobei die relativ kurzen Seiten 20, 21 des Gehäuses 11 im gezeigten Ausführungsbeispiel kreissegmentförmig und damit abgerundet konturiert sind. Dementsprechend sind auch die Seitenwände 16, 17 von Gehäuseoberteil 12 und Gehäuseunterteil 13 entsprechend konturiert.

Es sei an dieser Stelle darauf hingewiesen, dass auch andere Varianten des Gehäuses möglich sind. So können Gehäuseoberteil und einem Gehäuseunterteil über ein Filmscharnier miteinander verbunden sein, wobei dann die Überlappung der Seitenwände von Gehäuseoberteil und einem Gehäuseunterteil entfällt. Ebenso ist es möglich, dass das Gehäuse der Lichtwellenleiterverteilereinrichtung 10 über eine Kontur mit vier gleichlangen Seiten verfügt.

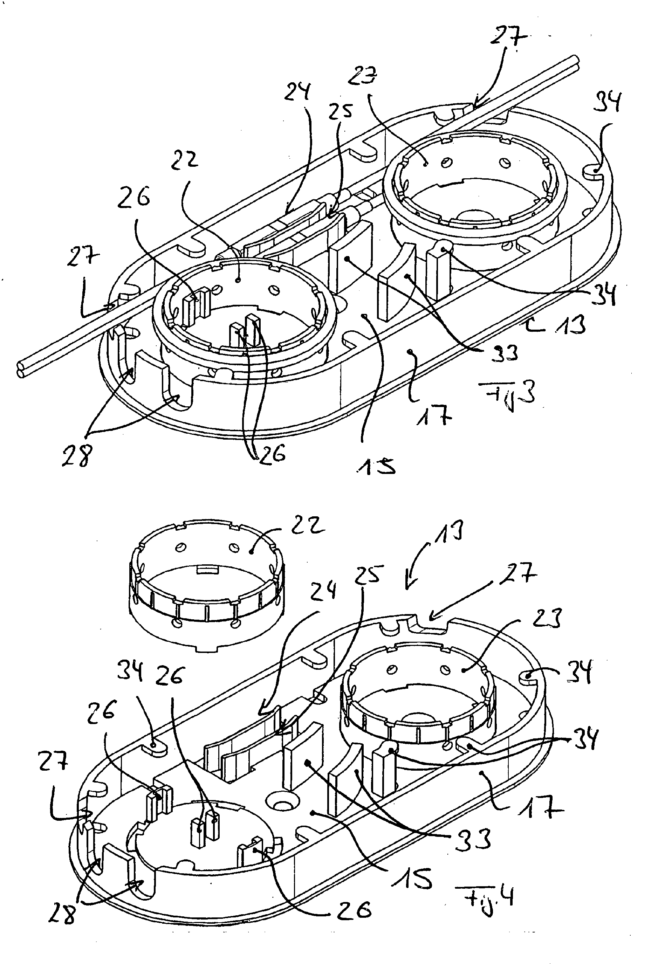

Im gezeigten Ausführungsbeispiel sind der Bodenwand 15 des Gehäuseunterteils 13 zwei vorzugsweise trommelartige Lichtwellenleiterführungselemente 22 und 23 zugeordnet, an welchen Überlängen von Lichtwellenleitern unter Einhaltung zulässiger Mindestbiegeradien aufgewickelt und demnach geführt werden können. Die Fig. 3 zeigt an den Lichtwellenleiterführungselementen 22, 23 aufgewickelte Überlängen von Lichtwellenleitern.

Zusätzlich zu den vorzugsweise trommelartigen Lichtwellenleiterführungselementen 22, 23 sind im Ausführungsbeispiel der Fig. 1 bis 5 der Bodenwand 15 des Gehäuseunterteils 13 Aufnahmeelemente 24, 25 für Lichtwellenleiterspleißverbindungen zugeordnet, wobei in der Darstellung der Fig. 3 in jedem der Aufnahmeelemente 24 und 25 jeweils eine Spleißverbindung zwischen Lichtwellenleitern abgelegt ist.

In montiertem Zustand des Gehäuses 11 ragen die vorzugsweise trommelartigen Lichtwellenleiterführungselemente 22, 23 und die Aufnahmeelemente 24, 25 für die Lichtwellenleiterspleißverbindungen in den Gehäuseinnenraum hinein.

Es sei an dieser Stelle darauf hingewiesen, dass gegebenenfalls auf die Aufnahmeelemente 24, 25 für die Lichtwellenleiterspleißverbindungen auch verzichtet werden kann. Weiterhin können andere als trommelartige Lichtwellenleiterführungselementen 22, 23 zum Einsatz kommen.

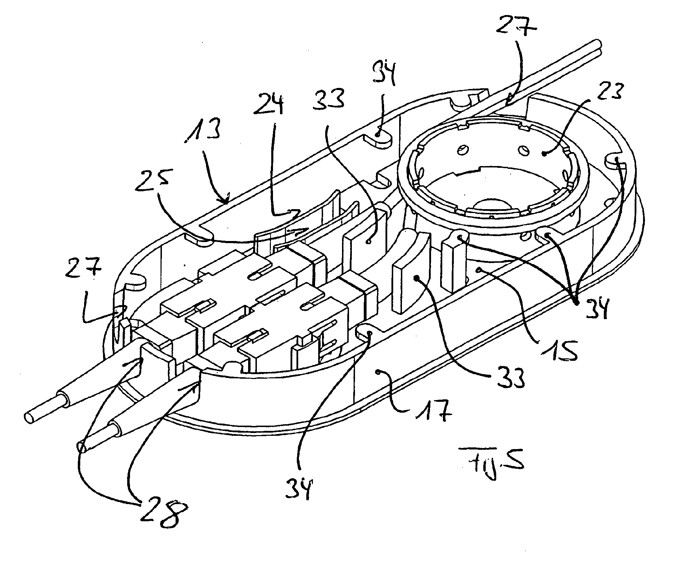

Bei der Lichtwellenleiterverteilereinrichtung 10 der Fig. 1 bis 5 ist das vorzugsweise trommelartige Lichtwellenleiterführungselement 22 von der Bodenwand 15 des Gehäuseunterteils 13 demontierbar (siehe Fig. 4). In montiertem Zustand (siehe Fig. 2, 3) umschließt das Lichtwellenleiterführungselement 22 einen Abschnitt der Bodenwand 15 des Gehäuseunterteils 13, dem Verankerungsmittel 26 für Lichtwellenleitersteckverbindungen zugeordnet sind. Nach der Demontage des vorzugsweise trommelartigen Lichtwellenleiterführungselements 22 können an demjenigen Abschnitt der Bodenwand 15, der vor der Demontage des vorzugsweise trommelartigen Lichtwellenleiterführungselements 22 von demselben umschlossen ist, Lichtwellenleitersteckverbindungen Aufnahme finden, nämlich unter Fixierung derselben an den Verankerungsmitteln 26. Fig. 5 zeigt Lichtwellenleitersteckverbindungen, die an den Verankerungsmitteln 26 fixiert sind und demnach im Bereich des Abschnitts der Bodenwand 15 Aufnahme finden, der bei montiertem Lichtwellenleiterführungselement 22 von demselben umschlossen ist. Fig. 5 kann weiterhin entnommen werden, dass Knickschutztüllen der Lichtwellenleitersteckverbindungen an der Bodenwand 15 zugeordneten Führungselementen 33 geführt sind. Über dem Gehäuseunterteil 13 zugeordnete Niederhalter 34 kann vermeiden werden, dass Lichtwellenleiter aus dem Gehäuseunterteil nach oben entweichen.

In beide relativ kurze Seiten des Gehäuses 11 und damit der Seitenwände 16, 17 von Gehäuseoberteil 12 und Gehäuseunterteil 13 sind erste Ausnehmungen 27 derart eingebracht, dass in montiertem Zustand des Gehäuses 11 über beide relativ kurze Seiten 20, 21 des Gehäuses 11 Lichtwellenleiter von außen in das Gehäuse 11 einführbar sind, nämlich derart, dass dieselben geradlinig den Aufnahmeelementen 24, 25 für die Lichtwellenleiterspleißverbindungen zuführbar sind.

Die ersten Ausnehmungen 27 sind weiterhin derart ins Gehäuse einbracht, dass in montiertem Zustand des Gehäuses 12 Lichtwellenleiter über die ersten Ausnehmungen 27 von außen in das Gehäuse einführbar und Lichtwellenleiterführungselementen 22, 23 tangential zuführbar sind.

In die relativ kurze Seite 20 des Gehäuses 11 sind darüber hinaus zweite Ausnehmungen 28 eingebracht, über die auch Lichtwellenleiter von außen in das Gehäuse einführbar sind, nämlich derart, dass dieselben geradlinig demjenigen Abschnitt der Bodenwand 15 zuführbar sind, der vor der Demontage des trommelartigen Lichtwellenleitführungselements 22 von demselben umschlossen ist. Die zweiten Ausnehmungen 28 werden demnach dann genutzt, wenn wie Fig. 5 zeigt, Lichtwellenleitersteckverbindungen zwischen Lichtwellenleitern gehandhabt werden sollen.

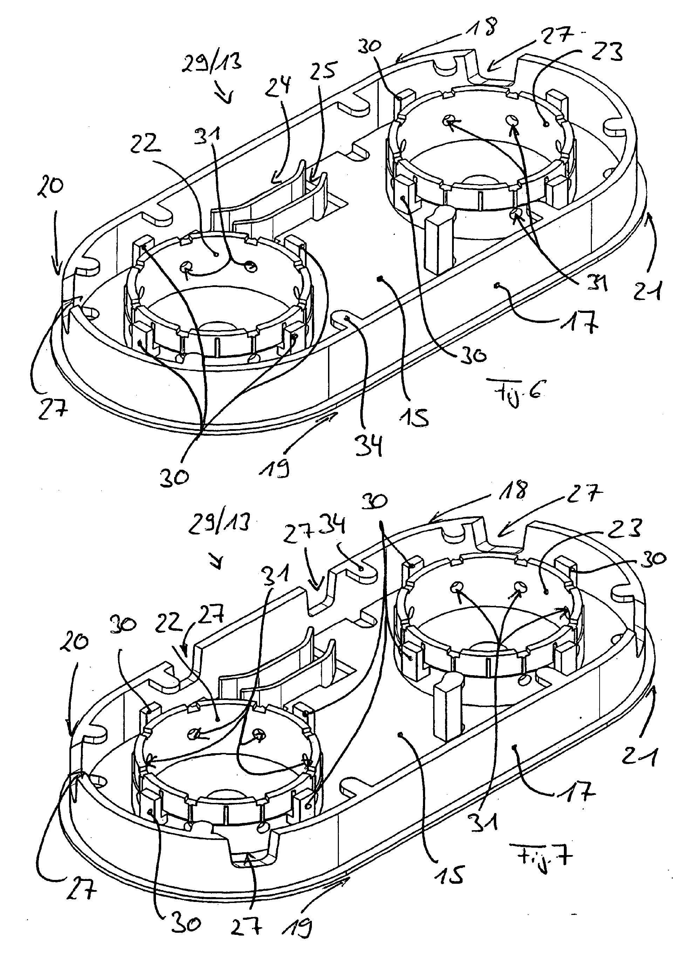

Ausführungsbeispiele einer weiteren Lichtwellenleiterverteilereinrichtung 29 der hier vorliegenden Erfindung zeigt Fig. 6 und 7, wobei in Fig. 6 und 7 jeweils nur das Unterteil 13 der Lichtwellenleiterverteilereinrichtung 29 gezeigt ist. Zur Vermeidung von Wiederholungen werden in den Ausführungsbeispielen der Fig. 6 und 7 gleiche Bezugsziffern verwendet wie im Ausführungsbeispiel der Fig. 1 bis 5 und es werden nur solche Details näher beschrieben, durch die sich die Ausführungsbeispiele der Fig. 6 und 7 vom Ausführungsbeispiel der Fig. 1 bis 5 unterscheiden.

In den Ausführungsbeispiel der Fig. 6 und 7 ist keines der beiden Lichtwellenleiterführungselemente 22, 23 von der Bodenwand 15 des Unterteils 13 demontierbar, vielmehr sind beide Lichtwellenleiterführungselemente 22, 23 mit der Bodenwand 15 des Gehäuseunterteils 13 fest verbunden. Daher entfallen in den Ausführungsbeispielen der Fig. 6 und 7 auch die Verankerungsmittel 26 und die Führungselemente 33.

In Fig. 6, 7 sind den vorzugsweise trommelartigen Lichtwellenleiterführungselementen 22, 23 jeweils mehrere Klemmelemente 30 zugeordnet, die über den äußeren Umfang des jeweiligen vorzugsweise trommelartigen Lichtwellenleiterführungselements 22, 23 verteilt sind.

An den Lichtwellenleiterführungselementen 22, 23 aufgewickelte und demnach geführte Lichtwellenleiter sind zwischen den Klemmelementen 30 und dem äußeren Umfang der vorzugsweise trommelartigen Lichtwellenleiterführungselemente 22, 23 fixierbar, und zwar unter Einhaltung zulässiger Mindestbiegeradien ohne unzulässig große Quetschung der Lichtwellenleiter im Bereich der Lichtwellenleiterführungselemente 22, 23.

Gemäß Fig. 6, 7 sind in die Lichtwellenleiterführungselemente 22, 23 weiterhin über den Umfang verteilt mehrere Ausnehmungen 31 eingebracht, durch die Kabelbinder eingefädelt werden können, um an den Lichtwellenleiterführungselementen 22, 23 aufgewickelte und über die Klemmelemente 30 geklemmte Lichtwellenleiter zusätzlich über die Kabelbinder zu fixieren.

Die Ausführungsbeispiele der Fig. 6 und 7 unterscheiden sich lediglich dadurch, dass im Ausführungsbeispiel der Fig. 7 auch in die relativ langen Seiten 18 erste Ausnehmungen 27 eingebracht sind.

Auch sind im Ausführungsbeispiel der Fig. 1 bis 5 Ausnehmungen 31 für Kabelbinder in die vorzugsweise trommelartigen Lichtwellenleiterführungselemente 22, 23 eingebracht.

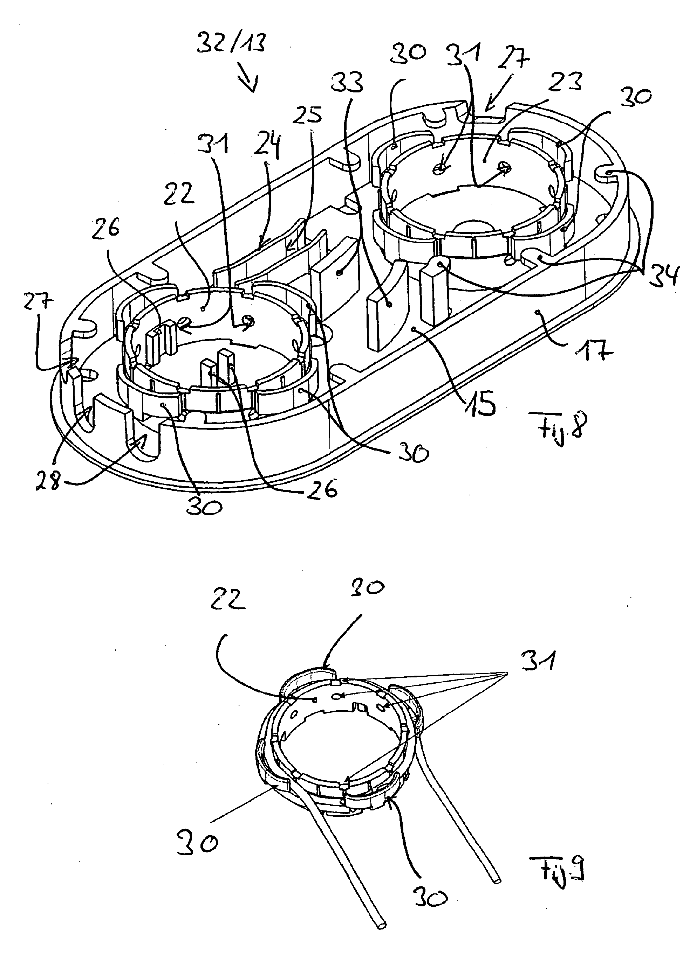

Fig. 8 und 9 zeigen ein Ausführungsbeispiel einer weiteren erfindungsgemäßen Lichtwellenleiterverteilereinrichtung 32, bei welchem einerseits das Lichtwellenleiterführungselement 22 demontierbar ist und bei welchem andererseits den trommelartigen Lichtwellenleiterführungselementen 22, 23 über den äußeren Umfang verteilt mehrere Klemmelemente 30 zugeordnet sind. Daher werden zur Vermeidung unnötiger Wiederholungen für gleiche Baugruppen wiederum gleiche Bezugsziffern verwendet.

Im Ausführungsbeispiel der Fig. 8 und 9 ist eine andere Konturierung für die Klemmelemente 30 gewählt als in den Ausführungsbeispielen der Fig. 6 und 7. Im Ausführungsbeispiel der Fig. 8 und 9 sind die Klemmelemente 30 federelementartig ausgeführt, wobei sich in Umfangsrichtung der trommelartigen Lichtwellenleiterführungselemente 22, 23 erstreckende Fortsätze der Klemmelemente 30 im Sinne eines Federelements unter Bereitstellung einer Federkraft die Klemmwirkung der Lichtwellenleiter an den Lichtwellenleiterführungselementen 22, 23 erhöhen.

### Bezugszeichenliste

- 10: Lichtwellenleiterverteilereinrichtung
- 11: Gehäuse
- 12: Gehäuseoberteil
- 13: Gehäuseunterteil
- 14: Bodenwand
- 15: Bodenwand
- 16: Seitenwand
- 17: Seitenwand
- 18: relativ lange Seite
- 19: relativ lange Seite
- 20: relativ kurze Seite
- 21: relativ kurze Seite
- 22: Lichtwellenleiterführungselemente
- 23: Lichtwellenleiterführungselemente
- 24: Aufnahmeelement
- 25: Aufnahmeelement
- 26: Verankerungsmittel
- 27: erste Ausnehmung
- 28: zweite Ausnehmung
- 29: Lichtwellenleiterverteilereinrichtung
- 30: Klemmelement
- 31: Ausnehmung
- 32: Lichtwellenleiterverteilereinrichtung
- 33: Führungselement
- 34: Niederhalter

## Patentansprüche

1. Lichtwellenleiterverteilereinrichtung, mit einem Gehäuse (11), welches eine Kontur mit mehreren Seiten (18, 19, 20, 21) aufweist, wobei einer Bodenwand (15) des Gehäuses mehrere trommelartige Lichtwellenleiterführungselemente (22, 23) zugeordnet sind, die in montiertem Zustand des Gehäuses in einen Gehäuseinnenraum hineinragen, wobei mindestens ein Lichtwellenleiterführungselement (22) von der jeweiligen Bodenwand (15) demontierbar ist, und wobei nach Demontage des oder jedes demontierbaren Lichtwellenleiterführungselements (22) in dem Abschnitt der jeweiligen Bodenwand, der vor der Demontage von dem oder jedem demontierbaren Lichtwellenleiterführungselement (22) umschlossen ist, Lichtwellenleitersteckverbindungen platzierbar sind, wobei in sich gegenüberliegende Seiten (20, 21) des Gehäuses (12) jeweils erste Ausnehmungen (27) derart eingebracht sind, dass in montiertem Zustand des Gehäuses (12) Lichtwellenleiter über die ersten Ausnehmungen (27) von außen in das Gehäuse einführbar und dem oder jedem montierten, trommelartigen Lichtwellenleiterführungselement (22, 23) tangential zuführbar sind, **dadurch gekennzeichnet, dass** in mindestens eine dieser sich gegenüberliegenden Seiten (20, 21) des Gehäuses (12) zweite Ausnehmungen (28) derart einbracht sind, dass in montiertem Zustand des Gehäuses (12) Lichtwellenleiter von außen in das Gehäuse einführbar und demjenigen Abschnitt der jeweiligen Bodenwand, der vor der Demontage von dem oder jedem demontierbaren Lichtwellenleiterführungselement (22) umschlossen ist und nach der Demontage der Platzierung der Lichtwellenleitersteckverbindungen dient, geradlinig zuführbar sind.

2. Lichtwellenleiterverteilereinrichtung nach Anspruch 1, **dadurch gekennzeichnet, dass** dem Abschnitt der jeweiligen Bodenwand, der vor der Demontage von dem oder jedem demontierbaren Lichtwellenleiterführungselement (22) umschlossen ist, Verankerungsmittel (26) zugeordnet sind, an denen nach Demontage des oder jedes Lichtwellenleiterführungselements die Lichtwellenleitersteckverbindungen fixierbar sind.

3. Lichtwellenleiterverteilereinrichtung nach Anspruch 1 oder 2, **dadurch gekennzeichnet, dass** das Gehäuse (11) ein Gehäuseunterteil (13) und ein Gehäuseoberteil (12) aufweist, wobei das Gehäuseunterteil und das Gehäuseoberteil jeweils eine Bodenwand (14, 15) und eine Seitenwand (16, 17) aufweisen, wobei in montiertem Zustand des Gehäuses das Gehäuseunterteil (13) und das Gehäuseoberteil (12) derart zusammensteckbar sind, dass sich unter Ausbildung eines Gehäuseinnenraums die Bodenwände (14, 15) gegenüberliegen und sich die Seitenwände (16, 17) zumindest abschnittsweise überlappen.

4. Lichtwellenleiterverteilereinrichtung nach Anspruch 3, **dadurch gekennzeichnet, dass** die ersten Ausnehmungen (27) und die zweiten Ausnehmungen (28) in die sich zumindest abschnittsweise überlappenden Seitenwände (16, 17) von Gehäuseunterteil (13) und Gehäuseoberteil (12) eingebracht sind.

5. Lichtwellenleiterverteilereinrichtung nach einem oder mehreren der Ansprüche 1 bis 4, **dadurch gekennzeichnet, dass** in montiertem Zustand des Gehäuses (12) Lichtwellenleiter über die ersten Ausnehmungen (27) Aufnahmeelementen (24, 25) für Lichtwellenleiterspleißverbindungen geradlinig zuführbar sind.

6. Lichtwellenleiterverteilereinrichtung nach einem oder mehreren der Ansprüche 1 bis 5, **dadurch gekennzeichnet, dass** das Gehäuse (12) zwei relativ lange Seiten (18, 19) und zwei relativ kurze, abgerundete Seiten (20, 21), aufweist, wobei die ersten Ausnehmungen (27) und die zweiten Ausnehmungen (28) in die relativ kurzen, abgerundeten Seiten (20, 21) eingebracht sind.

## Claims

1. Optical waveguide distributor device, having a housing (11) which has a contour with several sides (18, 19, 20, 21), wherein a plurality of drum-like optical waveguide elements (22, 23) are associated with a bottom wall (15) of the housing and, in the assembled state of the housing, project into a housing interior, wherein at least one optical waveguide element (22) can be removed from the respective bottom wall (15), and wherein, after removal of the or each removable optical waveguide element (22), optical waveguide plug connections can be placed in the section of the respective bottom wall which, before removal, is surrounded by the or each removable optical waveguide element (22), wherein in each case first recesses (27) are made in opposite sides (20, 21) of the housing (12) in such a way that, in the assembled state of the housing (12), optical waveguides can be inserted into the housing from the outside via the first recesses (27) and can be tangentially fed to the or each fitted, drum-like optical waveguide element (22, 23), **characterized in that** two recesses (28) are made in at least one of these opposite sides (20, 21) of the housing (12) in such a way that, in the assembled state of the housing (12), optical waveguides can be inserted into the housing from the outside and can be fed in a straight line to that section of the respective bottom wall which, before removal, is surrounded by the or each removable optical waveguide element (22) and, after removal, is used for placing the optical waveguide plug connections.

2. Optical waveguide distributor device according to Claim 1, **characterized in that** anchoring means (26) are associated with that section of the respective bottom wall which, before removal, is surrounded by the or each removable optical waveguide element (22), it being possible for the optical waveguide plug connections to be fixed to said anchoring means after removal of the or each optical waveguide element.

3. Optical waveguide distributor device according to Claim 1 or 2, **characterized in that** the housing (11) has a housing lower part (13) and a housing upper part (12), wherein the housing lower part and the housing upper part each have a bottom wall (14, 15) and a side wall (16, 17), wherein, in the assembled state of the housing, the housing lower part (13) and the housing upper part (12) can be plug-connected in such a way that the bottom walls (14, 15) are situated opposite one another so as to form a housing interior and the side walls (16, 17) overlap at least in sections.

4. Optical waveguide distributor device according to Claim 3, **characterized in that** the first recesses (27) and the second recesses (28) are made in the side walls (16, 17) of the housing lower part (13) and the housing upper part (12), the said side walls overlapping at least in sections.

5. Optical waveguide distributor device according to one or more of Claims 1 to 4, **characterized in that**, in the assembled state of the housing (12), optical waveguides can be fed in a straight line to receiving elements (24, 25) for optical waveguide splice connections via the first recesses (27).

6. Optical waveguide distributor device according to one or more of Claims 1 to 5, **characterized in that** the housing (12) has two relatively long sides (18, 19) and two relatively short, rounded sides (20, 21), wherein the first recesses (27) and the second recesses (28) are made in the relatively short, rounded sides (20, 21).

## Revendications

1. Dispositif répartiteur de fibres optiques, comprenant un boîtier (11) qui présente un contour ayant plusieurs côtés (18, 19, 20, 21), dans lequel une pluralité d'éléments de guidage de fibres optiques en forme de tambours (22, 23) sont associés à une paroi du fond (15) du boîtier, lesquels éléments font saillie dans un espace intérieur du boîtier à l'état monté du boîtier, dans lequel au moins un élément de guidage de fibre optique (22) peut être démonté de la paroi de fond respective (15), et dans lequel, après le démontage de l'élément ou de chaque élément de guidage de fibre optique démontable (22), des connecteurs de fibres optiques peuvent être positionnés dans la partie de la paroi de fond respective qui est entourée avant le démontage par l'élément de guidage de fibre optique démontable (22), dans lequel, dans les côtés opposés (20, 21) du boîtier (12), des premiers évidements respectifs (27) sont ménagés de telle manière qu'à l'état monté du boîtier (12), des fibres optiques puissent être introduites depuis l'extérieur dans le boîtier par l'intermédiaire des premiers évidements (27) et puissent être acheminées de manière tangentielle vers le ou chaque élément de guidage de fibre optique en forme de tambour (22, 23) monté, **caractérisé en ce que**, dans ces côtés opposés (20, 21) du boîtier (12), des deuxièmes évidements (28) sont ménagés de manière à ce qu'à l'état monté du boîtier (12), des fibres optiques puissent être introduites depuis l'extérieur dans le boîtier et puissent être acheminées en ligne droite vers la partie de la paroi de fond respective qui est entourée avant le démontage par le ou chaque élément de guidage de fibre optique démontable (22) et qui est utilisée après le démontage pour le positionnement des connecteurs de fibres optiques.

2. Dispositif répartiteur de fibres optiques selon la revendication 1, **caractérisé en ce que** des moyens d'ancrage (26) sont associés à la partie de la paroi de fond respective qui est entourée avant le démontage par le ou chaque élément de guidage de fibre optique démontable (22), sur lesquels peuvent être fixés les connecteurs de fibres optiques après le démontage du ou de chaque élément de guidage de fibre optique.

3. Dispositif répartiteur de fibres optiques selon la revendication 1 ou 2, **caractérisé en ce que** le boîtier (11) comprend une partie inférieure de boîtier (13) et une partie supérieure de boîtier (12), la partie inférieure de boîtier et la partie supérieure de boîtier comprenant respectivement une paroi de fond (14, 15) et une paroi latérale (16, 17), la partie inférieure de boîtier (13) et la partie supérieure de boîtier (12), à l'état monté du boîtier, pouvant être emboîtées de telle manière que les parois de fond (14, 15) soient opposées l'une à l'autre en formant un espace intérieur de boîtier et que les parois latérales (16, 17) se chevauchent au moins partiellement.

4. Dispositif répartiteur de fibres optiques selon la revendication 3, **caractérisé en ce que** les premiers évidements (27) et les seconds évidements (28) sont ménagés dans les parois latérales (16, 17) se chevauchant au moins partiellement de la partie inférieure de boîtier (13) et de la partie supérieure de boîtier (12).

5. Dispositif répartiteur de fibres optiques selon l'une ou plusieurs des revendications 1 à 4, **caractérisé en ce qu'**à l'état monté du boîtier (12), des éléments de réception (24, 25) destinés à des connecteurs d'épissurage de fibres optiques puissent être acheminés en ligne droite vers des fibres optiques par l'intermédiaire des premiers évidements (27).

6. Dispositif répartiteur de fibres optiques selon l'une ou plusieurs des revendications 1 à 5, **caractérisé en ce que** le boîtier (12) comprend deux côtés relativement longs (18, 19) et deux côtés arrondis relativement courts (20, 21), les premiers évidements (27) et les seconds évidements (28) étant ménagés dans les côtés arrondis relativement courts (20, 21).
